# EUROPÄISCHE PATENTSCHRIFT

(11) **EP 2 265 920 B1**
(45) Veröffentlichungstag und Bekanntmachung des Hinweises auf die Patenterteilung: **22.02.2012**
(21) Anmeldenummer: 09733440.3
(22) Anmeldetag: 17.04.2009
(51) Int. Cl.: G01M 13/00

(54) **VORRICHTUNG UND VERFAHREN ZUM ERKENNEN VON SCHÄDEN AN EINER ARBEITSMASCHINE**
APPARATUS AND METHOD FOR DETECTING DAMAGE TO A MACHINE
DISPOSITIF ET PROCÉDÉ DE DÉTECTION DE DOMMAGES SUR UNE MACHINE DE TRAVAIL

(30) Priorität: 18.04.2008 DE 102008019578
(43) Veröffentlichungstag der Anmeldung: 29.12.2010
(73) Patentinhaber: Wacker Neuson Produktion GmbH & Co. KG, 80809 München (DE)
(72) Erfinder: WAGNER, Stefan, 53604 Bad Honnef (DE)
(74) Vertreter: Müller - Hoffmann & Partner
(86) Internationale Anmeldenummer: PCT/EP2009/002838
(87) Internationale Veröffentlichungsnummer: WO 2009/127428

(56) Entgegenhaltungen:
- WO-A-01/23861
- US-A- 5 109 700
- US-A1- 2002 139 191

## Beschreibung

Die Erfindung betrifft eine Vorrichtung und ein Verfahren zum Erkennen von Schäden an einer Arbeitsmaschine.

Viele Arbeitsmaschinen, insbesondere Baumaschinen wie Fugenschneider, Bodentrennschleifmaschinen, Hämmer, Vibrationsplatten, Vibrationswalzen, Stampfer etc. erfahren durch Prozesskräfte eine Anregung ihrer Struktur. Derartige Baumaschinen weisen häufig Antriebe auf, die starke Schwingungen erzeugen, welche dann die Struktur der Maschine belasten. Insbesondere bei Vibrationsmaschinen wie Vibrationsplatten und -walzen oder Stampfern sind derartige Schwingungen erwünscht und entsprechen dem Zweck des Geräts. Aufgrund der Stärke der meist schwingungsbehafteten Prozesskräfte können nach einer gewissen Betriebszeit Schäden in der Struktur auftreten, die erhebliche weitere Schäden nach sich ziehen oder zumindest ein unerwünschtes Unterbrechen des Arbeitsbetriebs bewirken können. Es ist daher wünschenswert, während des Maschinenbetriebs bereits auftretende Schädigungen von Bauteilen zu erkennen und den Bediener davon zu informieren. Durch eine derartige rechtzeitige Fehlererkennung könnte verhindert werden, dass durch kleine Primärfehler bzw. -schäden größere Folgeschäden verursacht werden.

Aus der WO 01/23861 A1 ist eine Vorrichtung zum Überwachen von Schäden in Lagern bekannt. Mit Hilfe von Sensoren wird das Schwingungsverhalten der Lager überwacht und mit einem vorab abgespeicherten ordnungsgemäßen Schwingungsverhalten verglichen. Wenn eine Abweichung festgestellt wird, kann dies als Hinweis für einen Lagerschaden ausgewertet werden.

Der Erfindung liegt die Aufgabe zugrunde, eine Vorrichtung und ein Verfahren anzugeben, mit dem möglichst frühzeitig eine beginnende Schädigung bei Komponenten einer Vibrationsplatte erkannt und dem Benutzer angezeigt werden kann.

Die Aufgabe wird erfindungsgemäß durch eine Vibrationsplatte nach Anspruch 1 und ein Verfahren nach Anspruch 17 gelöst.

Eine als Schadensdiagnose-Vorrichtung dienende Vorrichtung zum Erkennen eines Schadens an einer durch einen Schwingungserreger mit einer vorbekannten Erregerfrequenz angeregten Arbeitsmaschine (Vibrationsplatte) weist auf: eine Detektionseinrichtung zum Erfassen von wenigstens einer mechanischen Größe für wenigstens eine Komponente der Arbeitsmaschine und zum Erstellen eines aktuellen Frequenzspektrums aufgrund der erfassten mechanischen Größe, eine Speichereinrichtung zum Speichern eines vorbekannten Frequenzspektrums, das für die vorbekannte Erregerfrequenz und entsprechend der mechanischen Größe für die Komponenten der Arbeitsmaschine vorab erstellt wurde, sowie eine Vergleichseinrichtung zum Vergleichen des aktuellen Frequenzspektrums mit dem vorbekannten Frequenzspektrum, Feststellen einer z.B. über eine vorgegebene Toleranz hinausgehenden Abweichung zwischen dem aktuellen Frequenzspektrum und dem vorbekannten Frequenzspektrum und zum Erzeugen eines entsprechenden Abweichungssignals.

Die Vorrichtung ist dementsprechend geeignet, das Frequenzverhalten von wenigstens einer bestimmten mechanischen Größe zu erfassen und in Form eines aktuellen Frequenzspektrums zu dokumentieren. Zu diesem Zweck wird eine geeignete mechanische Größe für eine Komponente der Arbeitsmaschine ausgewählt. Die Komponente kann z.B. ein einzelnes Bauteil, eine Gruppe von mehreren Bauelementen, eine Struktur oder mehrere miteinander starr oder beweglich gekoppelte Bauelemente sein.

Diese Komponente weist ein bestimmtes Frequenzverhalten in Antwort auf die anregende, vorbekannte Schwingung des Schwingungserregers auf. Dieses vorbekannte Antwortverhalten wird in der Speichereinrichtung in Form eines vorbekannten Frequenzspektrums gespeichert. Das vorbekannte Frequenzspektrum kann z.B. beim Hersteller der Maschine rechnerisch oder experimentell ermittelt werden und repräsentiert das im Normalfall zu beobachtende Antwortverhalten der betreffenden Komponente für die durch den Schwingungserreger generierte anregende Schwingung.

Die Begriffe "Frequenzverhalten" bzw...Frequenzspektrum" können Jeweils das Amplitudenspektrum betreffen. Alternativ kann darunter auch das Phasenspektrum oder eine Kombination von Amplituden- und Phasenspektrum verstanden werden. Der Begriff "Frequenzspektrum" soll insofern einen Oberbegriff darstellen.

Der Schwingungserreger kann z.B. ein Schlagwerk in einem Hammer, ein Antrieb für einen Stampfer zur Bodenverdichtung oder ein durch eine oder mehrere rotierende Unwuchtwellen gebildeter Schwingungserreger in einer Vibrationsplatte oder -walze sein. Aufgrund der im Betrieb meist konstanten Drehzahl des Antriebs ergibt sich, dass auch die Erreger- bzw. Anregungsfrequenz des Schwingungserregers konstant ist und einer vorbekannten Frequenz entspricht.

Die Vorrichtung weist schließlich die Vergleichseinrichtung auf, durch die das aktuelle Frequenzspektrum mit dem vorbekannten Frequenzspektrum verglichen werden kann. Stellt die Vergleichseinrichtung fest, dass die beiden Frequenzspektren voneinander abweichen, wird dies als Hinweis darauf genommen, dass sich die Frequenzeigenschaften der überwachten Komponente geändert haben. Dies wiederum wird als Zeichen dafür gewertet, dass sich die Struktur der Komponente geändert haben muss, was insbesondere durch eine Schädigung der Komponente erfolgt sein kann.

Wie oben bereits erwähnt, kann das Frequenzspektrum das Amplitudenspektrum und/oder das Phasenspektrum betreffen. Dementsprechend ist es bei der hier beschriebenen Auswertung der Frequenzspektren möglich, die Auswertung von Amplitudenspektren und Phasenspektren alternativ oder ergänzend zueinander durchzuführen. Eine Auswertung des Phasenspektrums zusätzlich zum Amplitudenspektrum kann sich aus technischer Sicht anbieten, um die Eigenfrequenzen bzw. Resonanzüberhöhung besser und robuster zu detektieren.

Für die Analyse der Antriebselemente, wie z.B. dem Motor oder einem Schwingungserreger, werden deren Spektren und Amplitudenabweichungen sowie relative Verschiebungen analysiert. Daraus lassen sich Rückschlüsse über mögliche Schädigungen ziehen.

Das von der Vergleichseinrichtung in diesem Fall erzeugte Abweichungssignal kann an eine Anzeigeeinrichtung geliefert werden, um ein Signal, z.B. für den Bediener, auszugeben. Der Bediener erhält dann die Information, dass eine Strukturveränderung der Arbeitsmaschine aufgetreten ist, die möglicherweise auf einen Fehler oder Schaden zurückzuführen ist. Je nach Ausgestaltung der Schadensdiagnose-Vorrichtung kann dem Bediener in diesem Zusammenhang konkret mitgeteilt werden, welche Komponente vermutlich geschädigt ist und welche Maßnahmen, z.B. Reparaturmaßnahmen, eingeleitet werden sollten.

Ergänzend oder alternativ können die Auswerteergebnisse, nämlich insbesondere das Abweichungssignal, zu einer zentralen Stelle per Funkübertragung übermittelt werden. Diese zentrale Stelle, z.B. ein Rechner auf einer Baustelle, kann auf diese Weise die Signale von mehreren Arbeitsmaschinen empfangen, auswerten, speichern und verwalten. An der zentralen Stelle kann auf diese Weise festgestellt und dokumentiert werden, ob eine jeweilige Arbeitsmaschine voll funktionsfähig oder bereits geschädigt ist.

Durch die Vergleichseinrichtung kann wenigstens eine Eigenfrequenz in dem aktuellen und in dem vorbekannten Frequenzspektrum identifizierbar sein. Des weiteren kann durch die Vergleichseinrichtung die identifizierte Eigenfrequenz des aktuellen Frequenzspektrums mit der identifizierten Eigenfrequenz des vorbekannten Frequenzspektrums vergleichbar sein, um die Abweichung zwischen dem aktuellen und dem vorbekannten Frequenzspektrum festzustellen.

Das bedeutet, dass nicht etwa ständig die gesamten Frequenzspektren miteinander verglichen werden müssen. Vielmehr genügt es, einzelne charakteristische Werte, nämlich die betreffenden Eigenfrequenzen zu überwachen. Dabei wird überprüft, ob sich eine für ein bestimmtes Bauteil (Komponente) vorbekannte Eigenfrequenz im Lauf des Betriebs ändert. Eine derartige Änderung der Eigenfrequenz während des Betriebs wird als Indiz dafür gewertet, dass sich die Struktur der betreffenden Komponente geändert hat, was auf einen Fehler bzw. eine Schädigung schließen lassen könnte.

Dementsprechend kann die Eigenfrequenz in Form einer Resonanzüberhöhung in dem aktuellen und in dem vorbekannten Frequenzspektrum definiert werden. Die Resonanzüberhöhung und die damit bei bestimmten Frequenzen erhöhten Amplituden ermöglichen es, die Eigenfrequenz jeweils relativ präzise zu bestimmen und gegebenenfalls ihre Veränderung zu überwachen.

Das vorbekannte Frequenzspektrum lässt sich aus der insbesondere beim Hersteller der Arbeitsmaschine vorliegenden Kenntnis ableiten, welche Eigenfrequenzen mit welchen Bauteilen korrespondieren. Diese Kenntnisse lassen sich vorab z.B. durch experimentelle oder analytische Modalanalyse ermitteln. Dementsprechend lässt sich ableiten, welches Bauteil im Falle einer Änderung der Eigenfrequenz von einer Eigenschaftsänderung betroffen ist.

Mechanische Bauelemente bzw. aus mehreren Bauteilen aufgebaute Maschinen besitzen für das mechanische System typische Eigenfrequenzen. Die Lage der Eigenfrequenzen wird dabei von den mechanischen Eigenschaften (Masseverteilung, Dämpfungseigenschaften, elastische Eigenschaften) charakterisiert. Man kann grob zwischen modalen Eigenfrequenzen (Eigenschwingungsformen, die ein Bauteil für sich allein bei Anregung zeigt) und Systemeigenfrequenzen aufgrund einer mechanischen Kopplung von mehreren Bauteilen unterscheiden. Dabei charakterisieren tiefere Eigenfrequenzen eher Starrkörperbewegungen, also Eigenfrequenzen aufgrund der Kopplung von Bauteilen, die über Feder-/Dämpferelemente gekoppelt sind, während höhere Eigenfrequenzen eher den Strukturmoden der Bauteile zugeordnet werden können.

Bei einer Baumaschine wirken prozessbedingt Wechselkräfte mit großer Amplitude ein. Dementsprechend wird auch bei einer Anregung mit nahezu konstanter Frequenz, z.B. durch einen Schwingungserreger, das gesamte Frequenzspektrum angeregt. Mit Hilfe der Schadensdiagnose-Vorrichtung ist es möglich, eine typische mechanische Größe, z.B. eine Beschleunigung, an einer geeigneten Stelle zu messen und die Eigenfrequenzen durch die entsprechenden Resonanzüberhöhungen im Bereich dieser Eigenfrequenzen aus dem Amplitudenspektrum abzulesen.

Die durch die Vergleichseinrichtung zu identifizierende Eigenfrequenz kann bereits vorgegeben sein, weil dem Hersteller der Arbeitsmaschine die charakteristischen Eigenfrequenzen der zu überwachenden Komponenten bekannt sind. Diese Eigenfrequenz kann dementsprechend einer bestimmten Komponente der Arbeitsmaschine zugeordnet werden.

Durch die Vergleichseinrichtung kann nicht nur eine Änderung der Eigenfrequenz festgestellt werden, sondern auch, ob sich die Eigenfrequenz des aktuellen Frequenzspektrums gegenüber der vorgegebenen Eigenfrequenz des vorbekannten Frequenzspektrums erhöht oder verringert hat. Aus der Richtung, in welche sich die Eigenfrequenzen verschieben, also ob sich die Eigenfrequenzen vergrößert oder verringert haben, lassen sich gegebenenfalls Aussagen darüber ableiten, welcher Art die Eigenschaftsänderung ist.

Selbstverständlich können durch die Vergleichseinrichtung auch mehrere vorgegebene Eigenfrequenzen jeweils überwacht werden.

Ebenso ist es möglich, dass die mehreren vorgegebenen Eigenfrequenzen jeweiligen Komponenten der Arbeitsmaschine oder Eigenschaften von wenigstens einer Komponente zugeordnet sind. Das bedeutet, dass die Schadensdiagnose-Vorrichtung mehrere Komponenten überwachen kann oder auch mehrere Eigenschaften (Eigenfrequenzen) einer bestimmten Komponente überwachen kann.

Die mechanische Größe kann eine schwingungsbehaftete Größe, insbesondere eine Beschleunigung, eine Geschwindigkeit, ein Weg oder eine Relativposition sein. Desweiteren kann die mechanische Größe eine absolute Größe bezüglich einem absoluten Bezugssystem, wie z.B. dem Erdkoordinatensystem, oder eine relative Größe in Form eines Relativverhaltens zwischen zwei oder mehreren Bauelementen der Arbeitsmaschine sein. So ist z.B. möglich, das Schwingungsverhalten eines Bauelements relativ zur Umgebung (absolutes Koordinatensystem) festzustellen. Ebenso kann das Schwingungs- bzw. Bewegungsverhalten von zwei Komponenten relativ zueinander überwacht werden.

Wenn die mechanische Größe eine Beschleunigung ist, kann es zweckmäßig sein, dass die Detektionseinrichtung einen Beschleunigungssensor aufweist.

Das Frequenzspektrum kann z.B. durch ein Amplitudenspektrum dargestellt werden, welches das Schwingungsverhalten eines Bauelements charakterisiert. Das Frequenzspektrum kann daher einem Amplitudenspektrum von wenigstens der Komponente entsprechen, an der ein entsprechender Sensor der Detektionseinrichtung vorgesehen ist. Das Amplitudenspektrum repräsentiert das Antwortverhalten der Komponente aufgrund der anregenden Schwingung.

Dementsprechend kann das Amplitudenspektrum aufgrund eines Beschleunigungssignals erzeugt werden, das von dem Beschleunigungssensor stammt.

Ergänzend oder alternativ zu dem Amplitudenspektrum kann das Frequenzspektrum auch durch ein Phasenspektrum bzw. eine Kombination aus Phasenspektrum und Amplitudenspektrum dargestellt werden, um das Schwingungsverhalten eines Bauelements zu charakterisieren. Dadurch lassen sich die Resonanzüberhöhungen bzw. Eigenfrequenzen zuverlässig erkennen.

Die Detektionseinrichtung kann mehrere Sensoren aufweisen, die an verschiedenen Orten der Arbeitsmaschine und/oder an verschiedenen Orten einer Komponente der Arbeitsmaschine angeordnet sind. Somit kann die Detektionseinrichtung und damit die gesamte Schadensdiagnose-Vorrichtung alle wesentlichen Komponenten der Arbeitsmaschine überwachen. Der Fachmann wird ohne Weiteres geeignete Stellen in der Arbeitsmaschine identifizieren, die für eine Überwachung besonders zweckmäßig sind.

Der Sensor kann - wie bereits gesagt - ein Beschleunigungssensor sein. Andere Sensoren können ein Wegsensor, ein akustischer Sensor, ein Mikrofon, ein Dehnungssensor oder ein Dehnungsmessstrelfen-Sensor sein. Ebenso sind optische, kapazitive oder induktive Sensoren möglich, mit denen z.B. Relativbewegungen zwischen einzelnen Komponenten detektiert werden können.

Die Anzeigeeinrichtung kann ein akustisches und/oder optisches Signal erzeugen, um den Bediener über einen Schadensfall bzw. zumindest über eine Änderung der Schwingungseigenschaften der überwachten Komponente zu informieren. Je nach Aufwand kann dem Bediener zusätzlich ein Vorschlag für eine Gegenmaßnahme angezeigt werden. Stellt z.B. die Schadensdiagnose-Vorrichtung fest, dass ein Gummipuffer in einer Vibrationsplatte geänderte Eigenschaften aufweist, was durch eine Schädigung z.B. durch Rissbildung erklärt werden könnte, könnte dem Bediener empfohlen werden, den betreffenden Gummipuffer auszutauschen. Hierzu könnte die Anzeigeeinrichtung zudem präzise Informationen geben, welcher der z.B. vier Gummipuffer der Vibrationsplatte gewechselt werden sollte. Ein Verfahren zum Erkennen eines Schadens an einer durch einen Schwingungserreger mit einer vorbekannten Erregerfrequenz angeregten Arbeitsmaschine weist die Schritte auf:
- Erfassen von wenigstens einer schwingungsbehafteten mechanischen Größe für wenigstens eine Komponente der Arbeitsmaschine;
- Erstellen eines aktuellen Frequenzspektrums aufgrund der erfassten mechanischen Größe;
- Vergleichen des aktuellen Frequenzspektrums mit einem vorab ermittelten und gespeicherten, vorbekannten Frequenzspektrum; und
- Erzeugen eines Signals, wenn durch das Vergleichen eine z.B. über eine vorgegebene Toleranz hinausgehende Abweichung zwischen dem aktuellen Frequenzspektrum und dem vorbekannten Frequenzspektrum festgestellt wurde.

Es ist dabei nicht erforderlich, dass ein Frequenzspektrum vollständig verglichen werden muss. Unter Umständen kann es ausreichen, wenn die Frequenzspektren wenigstens in Teilbereichen miteinander verglichen werden.

Es kann zweckmäßig sein, die Frequenzen der anregenden Kräfte, also z.B. die Unwuchtkräfte eines Schwingungserregers, und ihre Harmonischen für die Erkennung von Strukturschäden nicht zu berücksichtigen.

Der Vergleich eines aktuellen Frequenzspektrums mit einem vorbekannten Frequenzspektrum kann auch dadurch durchgeführt werden, dass die relativen Resonanzüberhöhungen zueinander innerhalb eines Frequenzspektrums bestimmt werden und anschließend mit denen des Vergleichs-Frequenzspektrums verglichen werden. Durch die Abweichungen der Resonanzüberhöhungen lassen sich Rückschlüsse auf Schäden in der Struktur ziehen.

Diese und weitere Vorteile und Merkmale der Erfindung werden nachfolgend anhand eines Beispiels unter Zuhilfenahme der begleitenden Figuren näher erläutert. Es zeigen:
- **Fig. 1**: in schematischer Seitenansicht eine Vibrationsplatte mit Beschleunigungssensor;
- **Fig. 2**: einen schematischen Aufbau einer Schadensdiagnose-Vorrichtung, und
- **Fig. 3**: ein Beispiel für ein von einem Beschleunigungssensor detektiertes Amplitudenspektrum.

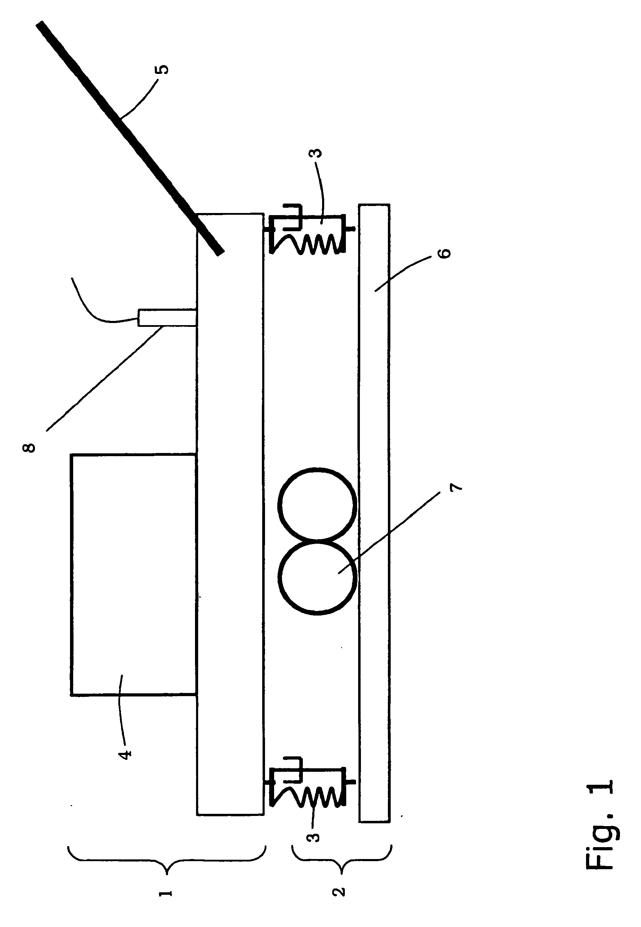

Fig. 1 zeigt eine Arbeitsmaschine in Form einer Baumaschine, nämlich eine Vibrationsplatte. Die erfindungsgemäße Vorrichtung kann jedoch auch bei vielen anderen Arten von Arbeitsmaschinen bzw. Baumaschinen eingesetzt werden, um eine Schädigung von mechanischen Bauelementen rechtzeitig diagnostizieren zu können.

Die Vibrationsplatte weist eine Obermasse 1 auf, die mit einer Untermasse 2 über Feder-Dämpferelemente 3 relativ zueinander beweglich gekoppelt ist. Zu der Obermasse 1 gehört unter anderem ein Antriebsmotor 4 und eine Deichsel 5, über die ein Bediener die Vibrationsplatte manuell führen kann. Die Untermasse 2 weist eine Bodenkontaktplatte 6 zur Verdichtung des Bodens und einen die Bodenkontaktplatte 6 beaufschlagenden Schwingungserreger 7 auf, der durch den Antriebsmotor 4 angetrieben wird. Der Schwingungserreger 7 kann z.B. aus zwei zueinander gegenläufig formschlüssig rotierenden Unwuchtwellen bestehen, die eine gerichtete Schwingung erzeugen. Es sind aber auch andere Möglichkeiten der Schwingungserregung bekannt.

Die Feder-Dämpferelemente 3 werden bei vielen Vibrationsplatten durch Gummipuffer gebildet, die die Obermasse 1 mit der Untermasse 2 verbinden. Gerade diese Gummipuffer unterliegen einem hohen Verschleiß und können zu Rissbildung und nachfolgend schneller Zerstörung neigen.

Eine derartige Vibrationsplatte ist in vielfältigen Ausführungsformen bekannt. So gibt es auch Vibrationsplatten, die keine Deichsel 5 zur manuellen Führung aufweisen, sondern mit einer Fernbedienung ausgestattet sind.

Auf der erfindungsgemäßen Vibrationsplatte ist an der Obermasse ein Beschleunigungssensor 8 vorgesehen, der die an der Obermasse 1 wirkenden Beschleunigungen erfasst und dementsprechend ein Beschleunigungssignal 9 während des Betriebes der Vibrationsplatte erzeugt.

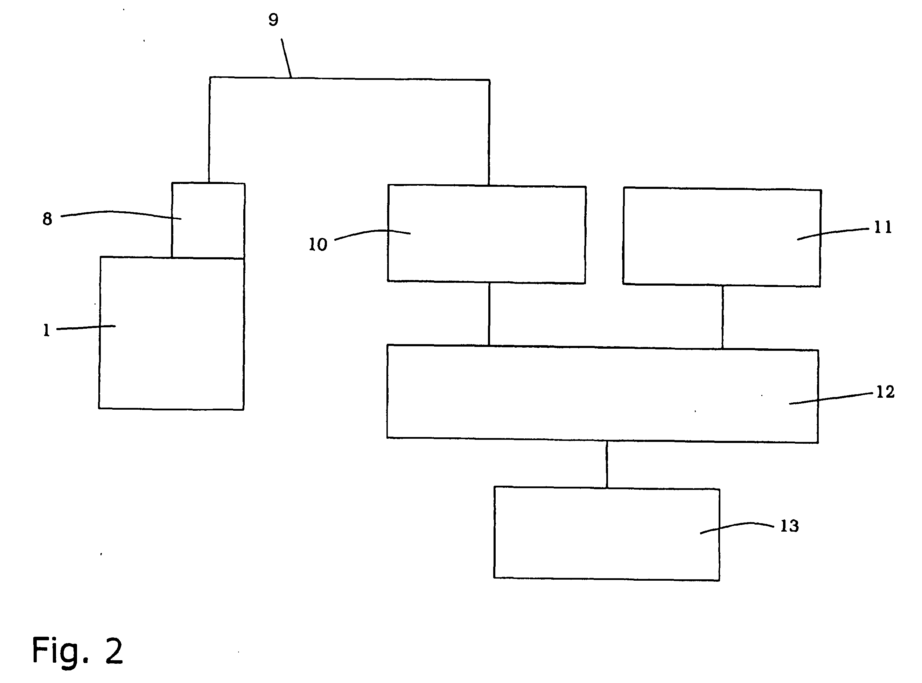

Fig. 2 zeigt einen schematischen Aufbau der Schadensdiagnose-Vorrichtung.

Die Obermasse 1 und der Beschleunigungssensor 8 sind auch in Fig. 2 dargestellt. Das von dem Beschleunigungssensor 8 generierte Beschleunigungssignal 9 wird zu einer Detektionseinrichtung 10 geführt, die das Beschleunigungssignal 9 mittels geeigneter Datenübertragungs- und Aufzeichnungsverfahren speichert. Der Beschleunigungssensor 8 und die Leitung für das Beschleunigungssignal 9 wird als zu der Detektionseinrichtung 10 zugehörig angesehen. Die Detektionseinrichtung 10 generiert auf dieser Basis ein aktuelles Frequenz- bzw. Amplitudenspektrum.

Weiterhin ist eine Speichereinrichtung 11 vorgesehen, in der ein vorbekanntes Frequenz- bzw. Amplitudenspektrum für die Obermasse 1 hinterlegt ist. Dieses Amplitudenspektrum wurde vorher, z.B. beim Hersteller, experimentell oder rechnerisch ermittelt. Es ist nicht zwingend erforderlich, das gesamte Amplitudenspektrum zu speichern. Vielmehr kann es genügen, lediglich charakteristische Werte, nämlich insbesondere Eigenfrequenzen und entsprechende Resonanzüberhöhungen zu speichern.

Die Detektionseinrichtung 10 und die Speichereinrichtung 11 sind mit einer Vergleichseinrichtung 12 gekoppelt, in der die Frequenzspektren aus der Detektionseinrichtung 10 und aus der Speichereinrichtung 11 verglichen werden. Sofern lediglich charakteristische Werte (Eigenfrequenzen) verglichen werden sollen, kann die Vergleichseinrichtung entsprechend ausgebildet sein.

Wenn die Vergleichseinrichtung 12 feststellt, dass das von der Detektionseinrichtung 10 gemessene tatsächliche Frequenzspektrum (bzw. einzelne Eigenfrequenzen) von dem in der Speichereinrichtung 11 gespeicherten vorbekannten Frequenzspektrum abweicht, kann über eine Anzeigeeinrichtung 13 eine entsprechende Information an den Bediener gegeben werden.

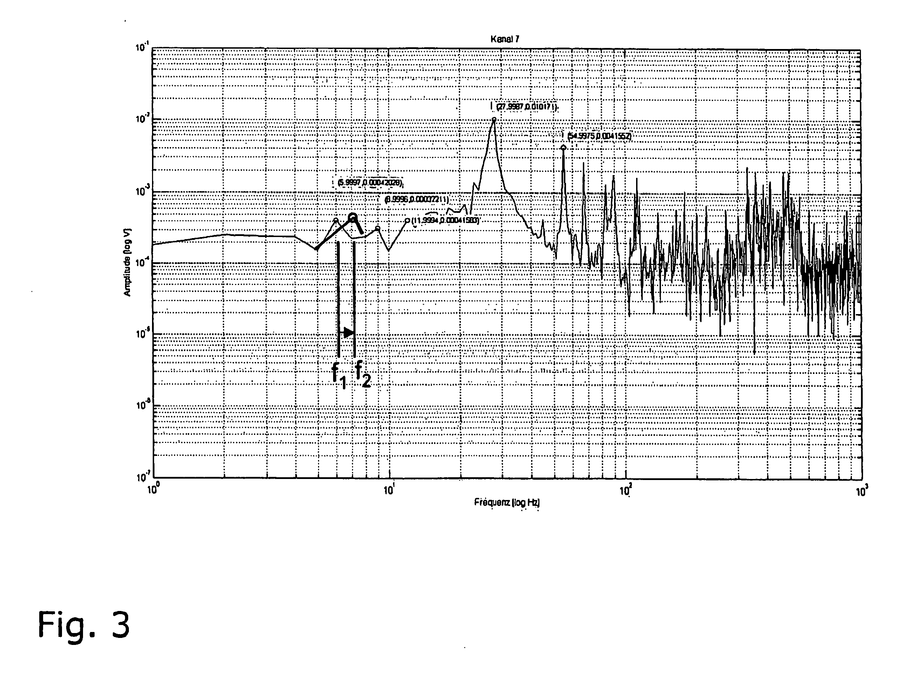

Fig. 3 zeigt beispielhaft das Amplitudenspektrum eines von dem Beschleunigungssensor 8 ermittelten Beschleunigungssignals 9 auf der Obermasse 1 der Vibrationsplatte während eines Verdichtungsvorgangs.

In dem Amplitudenspektrum ist eine Eigenfrequenz f₁ bei einem Wert von etwa 6 Hz eingezeichnet. Weitere, nicht benannte Resonanzüberhöhungen lassen sich bei 9 Hz, 12 Hz, 28 Hz und 55 Hz ablesen. Dazu ergeben sich noch weitere höherfrequente Resonanzüberhöhungen.

Die Eigenfrequenz f₁ charakterisiert eine Eigenform, bei der die Obermasse 1 gegen die Untermasse 2 schwingt. Kommt es nun, z.B. durch irreversible Gefügeverformung, z.B. in Folge von Aufwärm- und Abkühlvorgängen in den elastischen Puffern der Feder-Dämpferelemente 3, zu einer Erhöhung der Steifigkeit der Puffer, so verschiebt sich die Eigenfrequenz f₁ zu einer Eigenfrequenz f₂, wie durch eingezeichnete Linien in Fig. 3 gekennzeichnet.

Entsprechend kann sich die Eigenfrequenz f1 auch zu niedrigeren Eigenfrequenzen hin verschieben, wenn z.B. die Puffer in den Feder-Dämpferelementen 3 durch Risse weicher werden.

Beim Auftreten einer Verschiebung der Eigenfrequenz und einer damit detektierten Eigenschaftsänderung kann der Maschinenbediener z.B. mittels eines akustischen oder optischen Signals durch die Anzeigeeinrichtung 13 auf den Fehlerfall hingewiesen werden. Zudem kann - bei entsprechender Auswertung der Eigenschaftsänderung - die Art des Fehlers bzw. der Eigenschaftsänderung angezeigt werden.

Die Fehler- bzw. Schadensinformation kann auch in der Anzeigeeinrichtung 13 gespeichert und erst später, z.B. bei einer turnusmäßigen Inspektion, angezeigt bzw. ausgegeben werden.

Selbstverständlich können zusätzlich oder alternativ zu dem Beschleunigungssensor 8 auch mehrere Messwertaufnehmer eingesetzt werden, um die Aussagequalität zu erhöhen.

Verschiebung höherfrequenter Maxima (Resonanzüberhöhungen) geben Aufschluss über Änderungen der Eigenmoden der Bauteile, an denen der Aufnehmer angebracht ist. Sie weisen somit auf Risse oder Änderungen in der Struktur hin.

Ein bei Vibrationsplatten häufig auftretendes Problem sind z.B. Risse am Schutzrahmen der Obermasse 1, die auf diese Weise frühzeitig detektiert werden können, um weitere Folgeschäden zu vermeiden. So können z.B. derartige Risse bei rechtzeitiger Erkennung durch eine Schweißnaht wieder geschlossen werden, ohne dass aufwändigere Restaurierungsmaßnahmen erforderlich sind.

Tiefere Eigenfrequenzen kennzeichnen eher Starrkörper-Bewegungen, also Eigenfrequenzen aufgrund der Kopplung von Bauteilen, die über Feder-Dämpferelemente gekoppelt sind. Wenn sich daher tiefere Eigenfrequenzen ändern, lässt sich daraus schließen, dass die Feder-Dämpferelemente geschädigt sind, da sich die gekoppelten Massen (z.B. von Obermasse 1 und Untermasse 2) im Betrieb nicht ändern.

Anstelle des Beschleunigungssensors 8 lassen sich für die Bestimmung bzw. Messung des charakteristischen Amplitudenspektrums der Struktur bzw. des Bauteilverbunds auch andere Sensoren oder Messverfahren einsetzen, die unmittelbar oder mittelbar die Auswirkung von mechanischen Bewegungen und Beschleunigungen erfassen. Dazu gehören z.B. Mikrofone, DMS-Sensoren, Wegaufnehmer etc.

## Patentansprüche

1. Vibrationsplatte mit
- einer Obermasse (1);
- einer relativ zu der Obermasse (1) beweglich gekoppelten Untermasse (2);
- einem an der Untermasse (2) vorgesehenen Schwingungserreger (7); und mit
- einer Vorrichtung zum Erkennen eines Schadens an der durch den Schwingungserreger (7) mit einer vorbekannten Erregerfrequenz angeregten Vibrationsplatte,
wobei die Vorrichtung zum Erkennen eines Schadens aufweist
- eine Detektionseinrichtung (10) zum Erfassen von wenigstens einer mechanischen Größe für wenigstens eine Komponente (1, 2) der Vibrationsplatte und zum Erstellen eines aktuellen Frequenzspektrums aufgrund der erfassten mechanischen Größe;
- eine Speichereinrichtung (11) zum Speichern eines vorbekannten Frequenzspektrums, das für die vorbekannte Erregerfrequenz und entsprechend der mechanischen Größe für die Komponente der Vibrationsplatte vorab erstellt wurde; und
- eine Vergleichseinrichtung (12) zum Vergleichen des aktuellen Frequenzspektrums mit dem vorbekannten Frequenzspektrum, Feststellen einer Abweichung zwischen dem aktuellen Frequenzspektrum und dem vorbekannten Frequenzspektrum, und Erzeugen eines entsprechenden Abweichungssignals;
wobei
- durch die Vergleichseinrichtung (12) wenigstens eine Eigenfrequenz in dem aktuellen und in dem vorbekannten Frequenzspektrum identifizierbar ist; und wobei
- durch die Vergleichseinrichtung (12) die identifizierte Eigenfrequenz des aktuellen Frequenzspektrums mit der identifizierten Eigenfrequenz des vorbekannten Frequenzspektrums vergleichbar ist, um die Abweichung zwischen dem aktuellen und dem vorbekannten Frequenzspektrum festzustellen.

2. Vibrationsplatte nach Anspruch 1, **gekennzeichnet durch** eine Anzeigeeinrichtung (13) zum Ausgeben eines Signals, wenn **durch** die Vergleichseinrichtung (12) das Abweichungssignal erzeugt wird.

3. Vibrationsplatte nach Anspruch 1 oder 2, **dadurch gekennzeichnet, dass** die Komponente der Vibrationsplatte ein einzelnes Bauelement, eine Struktur (1, 2) oder mehrere miteinander starr oder beweglich gekoppelte Bauelemente ist.

4. Vibrationsplatte nach einem der Ansprüche 1 bis 3, **dadurch gekennzeichnet, dass** die Eigenfrequenz in Form einer Resonanzüberhöhung in dem aktuellen und in dem vorbekannten Frequenzspektrum definierbar ist.

5. Vibrationsplatte nach einem der Ansprüche 1 bis 4, **dadurch gekennzeichnet, dass**
- die durch die Vergleichseinrichtung (12) zu identifizierende Eigenfrequenz vorgegeben ist; und dass
- diese Eigenfrequenz einer bestimmtem Komponente der Vibrationsplatte zuordenbar ist.

6. Vibrationsplatte nach einem der Ansprüche 1 bis 5, **dadurch gekennzeichnet, dass** durch die Vergleichseinrichtung (12) feststellbar ist, ob sich die Eigenfrequenz des aktuellen Frequenzspektrums gegenüber der vorgegebenen Eigenfrequenz des vorbekannten Frequenzspektrums erhöht oder verringert hat.

7. Vibrationsplatte nach einem der Ansprüche 1 bis 6, **dadurch gekennzeichnet, dass** durch die Vergleichseinrichtung (12) mehrere vorgegebene Eigenfrequenzen jeweils überwachbar sind.

8. Vibrationsplatte nach einem der Ansprüche 1 bis 7, **dadurch gekennzeichnet, dass** die mehreren vorgegebenen Eigenfrequenzen jeweiligen Komponenten der Vibrationsplatte oder Eigenschaften von wenigstens einer Komponente zugeordnet sind.

9. Vibrationsplatte nach einem der Ansprüche 1 bis 8, **dadurch gekennzeichnet, dass** die mechanische Größe eine schwingungsbehaftete Größe, insbesondere eine Beschleunigung, eine Geschwindigkeit, ein Weg oder eine Relativposition ist.

10. Vibrationsplatte nach einem der Ansprüche 1 bis 9, **dadurch gekennzeichnet, dass** die mechanische Größe eine absolute Größe bezüglich einem absoluten Bezugssystem oder eine relative Größe in Form eines Relativverhaltens zwischen zwei oder mehreren Bauelementen der Vibrationsplatte ist.

11. Vibrationsplatte nach einem der Ansprüche 1 bis 10, **dadurch gekennzeichnet, dass** die mechanische Größe eine Beschleunigung ist und dass die Detektionseinrichtung (10) einen Beschleunigungssensor (8) aufweist.

12. Vibrationsplatte nach einem der Ansprüche 1 bis 11, **dadurch gekennzeichnet, dass** das Frequenzspektrum ein Amplitudenspektrum und/oder ein Phasenspektrum von wenigstens einer Komponente ist, an der ein Sensor (8) der Detektionseinrichtung (10) vorgesehen ist.

13. Vibrationsplatte nach einem der Ansprüche 1 bis 12, **dadurch gekennzeichnet, dass** das Frequenzspektrum ein Amplitudenspektrum und/oder ein Phasenspektrum eines von dem Beschleunigungssensor (8) erzeugten Beschleunigungssignals ist.

14. Vibrationsplatte nach einem der Ansprüche 1 bis 13, **dadurch gekennzeichnet, dass** die Detektionseinrichtung (10) mehrere Sensoren aufweist, die an verschiedenen Orten der Vibrationsplatte und/oder an verschiedenen Orten einer Komponente der Vibrationsplatte angeordnet sind.

15. Vibrationsplatte nach Anspruch 14, **dadurch gekennzeichnet, dass** der Sensor ein Beschleunigungssensor (8), ein Wegsensor, ein akustischer Sensor, ein Mikrofon, ein Dehnungssensor oder ein Dehnungsmessstreifen-Sensor ist.

16. Vibrationsplatte nach einem der Ansprüche 1 bis 15, **dadurch gekennzeichnet, dass** durch die Anzeigeeinrichtung (13) ein akustisches und/oder optisches Signal erzeugbar ist, zum Informieren des Bedieners über einen Schadensfall.

17. Verfahren zum Erkennen eines Schadens an einer durch einen Schwingungserreger (7) mit einer vorbekannten Frequenz angeregten Vibrationsplatte, mit den Schritten
- Erfassen von wenigstens einer schwingungsbehafteten mechanischen Größe für wenigstens eine Komponente (1, 2) der Vibrationsplatte;
- Erstellen eines aktuellen Frequenzspektrums aufgrund der erfassten mechanischen Größe;
- Identifizieren von wenigstens einer Eigenfrequenz in dem aktuellen und in einem vorab ermittelten und gespeicherten, vorbekannten Frequenzspektrum;
- Vergleichen der identifizierten Eigenfrequenz des aktuellen Frequenzspektrums mit der identifizierten Eigenfrequenz des vorbekannten Frequenzspektrums
- Erzeugen eines Signals, wenn durch das Vergleichen eine Abweichung zwischen der Eigenfrequenz des aktuellen Frequenzspektrums und der Eigenfrequenz des vorbekannten Frequenzspektrums festgestellt wurde.

## Claims

1. Vibration plate having
- an upper mass (1);
- a lower mass (2) which is coupled in a movable manner relative to the upper mass (1);
- an oscillation exciter (7) which is provided on the lower mass (2); and having
- a device for detecting damage to the vibration plate which is excited by the oscillation exciter (7) at a previously known exciter frequency,
wherein the device for detecting damage comprises
- a detection device (10) for detecting at least one mechanical variable for at least one component (1, 2) of the vibration plate and for producing a current frequency spectrum on the basis of the acquired mechanical variable;
- a storage device (11) for storing a previously known frequency spectrum which has been produced in advance for the previously known exciter frequency and corresponding to the mechanical variable for the component of the vibration plate; and
- a comparator device (12) for comparing the current frequency spectrum to the previously known frequency spectrum, establishing a deviation between the current frequency spectrum and the previously known frequency spectrum, and producing a corresponding deviation signal;
wherein
- by means of the comparator device (12) at least one resonant frequency can be identified in the current frequency spectrum and in the previously known frequency spectrum; and wherein
- by means of the comparator device (12) the identified resonant frequency of the current frequency spectrum can be compared to the identified resonant frequency of the previously known frequency spectrum, in order to establish the deviation between the current frequency spectrum and the previously known frequency spectrum.

2. Vibration plate as claimed in claim 1, **characterised by** a display device (13) for outputting a signal if the deviation signal is produced by the comparator device (12).

3. Vibration plate as claimed in claim 1 or 2, **characterised in that** the component of the vibration plate is a single structural component, a structure (1, 2) or several structural components which are coupled together in a rigid or movable manner.

4. Vibration plate as claimed in any one of claims 1 to 3, **characterised in that** the resonant frequency can be defined in the form of a resonance rise in the current frequency spectrum and in the previously known frequency spectrum.

5. Vibration plate as claimed in any one of claims 1 to 4, **characterised in that**
- the resonant frequency to be identified by the comparator device (12) is specified; and
- this resonant frequency can be allocated to a specific component of the vibration plate.

6. Vibration plate as claimed in any one of claims 1 to 5, **characterised in that** by means of the comparator device (12) it is possible to establish whether the resonant frequency of the current frequency spectrum is increased or reduced with respect to the specified resonant frequency of the previously known frequency spectrum.

7. Vibration plate as claimed in any one of claims 1 to 6, **characterised in that** several specified resonant frequencies can be monitored in each case by the comparator device (12).

8. Vibration plate as claimed in any one of claims 1 to 7, **characterised in that** the several specified resonant frequencies are allocated to respective components of the vibration plate or to properties of at least one component.

9. Vibration plate as claimed in any one of claims 1 to 8, **characterised in that** the mechanical variable is a variable which is encumbered with oscillation, in particular an acceleration, a speed, a path or a relative position.

10. Vibration plate as claimed in any one of claims 1 to 9, **characterised in that** the mechanical variable is an absolute variable in relation to an absolute reference system or a relative variable in the form of a relative behaviour between two or several structural components of the vibration plate.

11. Vibration plate as claimed in any one of claims 1 to 10, **characterised in that** the mechanical variable is an acceleration and the detection device (10) comprises an acceleration sensor (8).

12. Vibration plate as claimed in any one of claims 1 to 11, **characterised in that** the frequency spectrum is an amplitude spectrum and/or a phase spectrum of at least one component, on which a sensor (8) of the detection device (10) is provided.

13. Vibration plate as claimed in any one of claims 1 to 12, **characterised in that** the frequency spectrum is an amplitude spectrum and/or a phase spectrum of an acceleration signal produced by the acceleration sensor (8).

14. Vibration plate as claimed in any one of claims 1 to 13, **characterised in that** the detection device (10) comprises several sensors which are disposed at various locations of the vibration plate and/or at various locations of a component of the vibration plate.

15. Vibration plate as claimed in claim 14, **characterised in that** the sensor is an acceleration sensor (8), a path sensor, an acoustic sensor, a microphone, an expansion sensor or a resistance strain gauge sensor.

16. Vibration plate as claimed in any one of claims 1 to 15, **characterised in that** by means of the display device (13) an acoustic and/or an optical signal can be produced for the purpose of informing the operator about an event of damage.

17. Method of detecting damage to a vibration plate which is excited by an oscillation exciter (7) at a previously known frequency, comprising the steps of
- detecting at least one mechanical variable, which is encumbered with oscillation, for at least one component (1, 2) of the vibration plate;
- creating a current frequency spectrum on the basis of the detected mechanical variable;
- identifying at least one resonant frequency in the current frequency spectrum and in a previously known frequency spectrum which is ascertained and stored in advance;
- comparing the identified resonant frequency of the current frequency spectrum to the identified resonant frequency of the previously known frequency spectrum;
- producing a signal if a deviation between the resonant frequency of the current frequency spectrum and the resonant frequency of the previously known frequency spectrum has been established by the comparison.

## Revendications

1. Plaque vibrante, comportant
- un composant supérieur (1) ;
- une composant inférieur (2), couplé de manière mobile par rapport au composant supérieur (1) ;
- un vibrateur (7), prévu au niveau du composant inférieur (2) ; et
- un dispositif destiné à détecter un dommage sur la plaque vibrante activée par le vibrateur (7) avec une fréquence d'excitation antérieure connue,
le dispositif destiné à détecter un dommage comportant
- un système de détection (10) destiné à enregistrer au moins une grandeur mécanique pour au moins un composant (1, 2) de la plaque vibrante et destiné à établir un spectre de fréquences actuel sur la base des grandeurs mécaniques enregistrées ;
- une mémoire (11) pour y stoker un spectre de fréquences antérieur connu, lequel a été établi au préalable pour la fréquence d'excitation antérieure connue et conformément à la grandeur mécanique pour les composants de la plaque vibrante ; et
- un dispositif de comparaison (12) destiné à comparer le spectre de fréquences actuel avec le spectre de fréquences antérieur connu, à constater une divergence entre le spectre de fréquences actuel et le spectre de fréquences antérieur connu, et à générer un signal de divergence correspondant ;
dans laquelle
- au moins une fréquence de résonance peut être identifiée par le dispositif de comparaison (12) dans le spectre de fréquences actuel et dans le spectre de fréquences antérieur connu ; et dans laquelle
- la fréquence de résonance identifiée du spectre de fréquences actuel peut être comparée par le dispositif de comparaison (12) à la fréquence de résonance identifiée du spectre de fréquences antérieur connu, afin de constater la divergence entre le spectre de fréquences actuel et le spectre de fréquences antérieur connu.

2. Plaque vibrante selon la revendication 1, **caractérisée par** un dispositif de signalisation (13) destiné à délivrer un signal lorsque le signal de divergence est généré par le dispositif de comparaison (12).

3. Plaque vibrante selon la revendication 1 ou 2, **caractérisée en ce que** le composant de la plaque vibrante est un seul élément, une structure (1, 2) ou plusieurs éléments couplés entre eux de manière rigide ou mobile.

4. Plaque vibrante selon l'une quelconque des revendications 1 à 3, **caractérisée en ce que** la fréquence de résonance peut être définie sous la forme d'une surélévation de la résonance dans le spectre de fréquences actuel et dans le spectre de fréquences antérieur connu.

5. Plaque vibrante selon l'une quelconque des revendications 1 à 4, **caractérisée en ce que**
- la fréquence de résonance à identifier par le dispositif de comparaison (12) est prédéfinie ; et **en ce que**
- cette fréquence de résonance peut être associée à un composant déterminé de la plaque vibrante.

6. Plaque vibrante selon l'une quelconque des revendications 1 à 5, **caractérisée en ce que** le dispositif de comparaison (12) permet de constater si la fréquence de résonance du spectre de fréquences actuel a augmenté ou a diminué par rapport à la fréquence de résonance prédéfinie du spectre de fréquences antérieur connu.

7. Plaque vibrante selon l'une quelconque des revendications 1 à 6, **caractérisée en ce que** plusieurs fréquences de résonance prédéfinies peuvent être contrôlées respectivement par le dispositif de comparaison (12).

8. Plaque vibrante selon l'une quelconque des revendications 1 à 7, **caractérisée en ce que** la pluralité de fréquences de résonance prédéfinies sont associées aux composants respectifs de la plaque vibrante ou aux propriétés d'au moins un composant.

9. Plaque vibrante selon l'une quelconque des revendications 1 à 8, **caractérisée en ce que** la grandeur mécanique est une grandeur sujette à des oscillations, en particulier une accélération, une vitesse, un mouvement ou une position relative.

10. Plaque vibrante selon l'une quelconque des revendications 1 à 9, **caractérisée en ce que** la grandeur mécanique est une grandeur absolue par rapport à un système de référence absolu ou une grandeur relative sous la forme d'un comportement relatif entre deux ou plusieurs éléments de la plaque vibrante.

11. Plaque vibrante selon l'une quelconque des revendications 1 à 10, **caractérisée en ce que** la grandeur mécanique est une accélération et **en ce que** le système de détection (10) comporte un capteur d'accélération (8).

12. Plaque vibrante selon l'une quelconque des revendications 1 à 11, **caractérisée en ce que** le spectre de fréquences est un spectre d'amplitudes et/ou un spectre de phases d'au moins un composant, sur lequel est prévu un capteur (8) du système de détection (10).

13. Plaque vibrante selon l'une quelconque des revendications 1 à 12, **caractérisée en ce que** le spectre de fréquences est un spectre d'amplitudes et/ou un spectre de phases d'un signal d'accélération généré par le capteur d'accélération (8).

14. Plaque vibrante selon l'une quelconque des revendications 1 à 13, **caractérisée en ce que** le système de détection (10) comporte plusieurs capteurs, qui sont disposés à différents emplacements de la plaque vibrante et/ou à différents emplacement d'un composant de la plaque vibrante.

15. Plaque vibrante selon la revendication 14, **caractérisée en ce que** le capteur (8) est un capteur d'accélération (8), un capteur de mouvement, un capteur acoustique, un microphone, un capteur d'allongement ou un capteur de jauge de contrainte.

16. Plaque vibrante selon l'une quelconque des revendications 1 à 15, **caractérisée en ce qu'**un signal acoustique et/ou un signal optique peuvent être générés par le dispositif de signalisation (13), afin de signaler un endommagement à l'utilisateur.

17. Procédé pour détecter un dommage sur une plaque vibrante, activée par un vibrateur (7) avec une fréquence antérieure connue, comportant les étapes :
- enregistrement d'au moins une grandeur mécanique sujette à des vibrations pour au moins un composant (1, 2) de la plaque vibrante ;
- établissement d'un spectre de fréquences actuel sur la base de la grandeur mécanique enregistrée ;
- identification d'au moins une fréquence de résonance dans le spectre de fréquences actuel et dans un spectre de fréquences antérieur connu, déterminé au préalable et stocké en mémoire ;
- comparaison de la fréquence de résonance identifiée du spectre de fréquences actuel avec la fréquence de résonance identifiée du spectre de fréquences antérieur connu ;
- émission d'un signal lorsque la comparaison a permis de constater une divergence entre la fréquence de résonance du spectre de fréquences actuel et la fréquence de résonance du spectre de fréquences antérieur connu.
